# FASCICULE DE BREVET EUROPEEN

(11) **EP 2 937 934 B1**
(45) Date de publication et mention de la délivrance du brevet: **01.02.2017**
(21) Numéro de dépôt: 15164318.6
(22) Date de dépôt: 20.04.2015
(51) Int. Cl.: H01Q 1/28, H01Q 19/19, H01Q 21/00, H01Q 19/18

(54) **ENSEMBLE DE DEUX ANTENNES À DOUBLE RÉFLECTEURS MONTÉES SUR UN SUPPORT COMMUN ET UN SATELLITE COMPORTANT CET ENSEMBLE**
EINHEIT AUS ZWEI ANTENNEN MIT DOPPELREFLEKTOREN, DIE AUF EINER GEMEINSAMEN HALTERUNG MONTIERT SIND, UND SATELLIT, DER DIESE EINHEIT UMFASST
ASSEMBLY OF TWO DUAL-REFLECTOR ANTENNAS MOUNTED ON A COMMON MOUNTING AND A SATELLITE COMPRISING SAID ASSEMBLY

(30) Priorité: 25.04.2014 FR 1400978
(43) Date de publication de la demande: 28.10.2015
(73) Titulaire: THALES, 92400 Courbevoie (FR)
(72) Inventeur: Cartaillac, Erwan, 09700 LABATUT (FR); Pouyez, Stéphane, 32600 L'ISLE-JOURDAIN (FR); Medici, Daniel, 31037 TOULOUSE (FR); Boffelli, Stéphane, 06150 CANNES-LA-BOCCA (FR); Gérard, Alain, 31037 TOULOUSE (FR)
(74) Mandataire: Nguyen, Dominique

(56) Documents cités:
- EP-A1- 0 984 512
- EP-A1- 1 020 952
- US-B1- 6 211 835

## Description

La présente invention concerne un ensemble de deux antennes à double réflecteurs montées sur un support commun et un satellite comportant un tel ensemble. Elle s'applique au domaine des applications spatiales et en particulier aux antennes à double réflecteurs à grandes focales destinées à être implantées sur une même face d'un satellite.

Comme décrit dans le document EP 1020952, une antenne à double réflecteurs est constituée d'un réflecteur principal 10, d'un réflecteur secondaire 11 et d'une source rayonnante 12 placée devant le réflecteur secondaire. La source rayonnante peut fonctionner en mono-polarisation ou en bi-polarisation circulaire ou linéaire, en mono-bande de fréquence ou en multi-bandes de fréquence. La source rayonnante 12 émet des ondes électromagnétiques illuminant le réflecteur secondaire 11 qui réfléchit les ondes électromagnétiques vers le réflecteur principal 10. Les ondes électromagnétiques sont ensuite réfléchies par le réflecteur principal 10 vers la Terre, sous la forme d'un ou de plusieurs faisceaux dont les empreintes au sol forment une couverture mono-spot, ou respectivement multi-spots, selon le nombre de faisceaux émis.

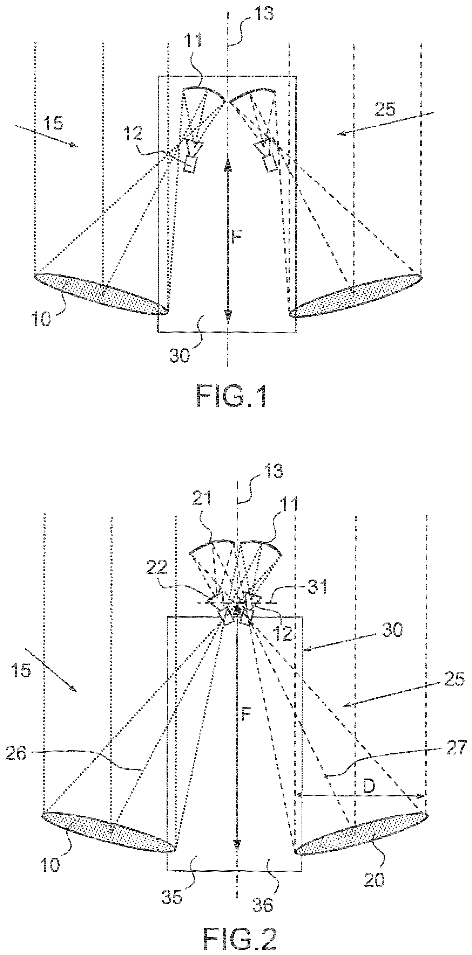

Lorsque l'antenne à double réflecteurs comporte une focale F courte, c'est-à-dire lorsque le rapport F/D entre la focale F du réflecteur principal et le diamètre D du réflecteur principal est compris entre 0,8 et 1,1, il est possible d'implanter deux antennes à double réflecteurs 15, 25 sur une même face latérale 30 d'un satellite, en disposant les deux antennes à double réflecteurs de part et d'autre d'une ligne médiane 13 partageant la face latérale en deux zones, comme représenté par exemple sur la figure 1. Cependant, ce type d'antenne comporte des performances radiofréquence réduites.

Lorsque l'antenne à double réflecteurs comporte une focale longue, c'est-à-dire lorsque le rapport F/D est supérieur à 1,1, l'implantation sur une même face d'un satellite n'est actuellement possible qu'en utilisant des réflecteurs secondaires déployables implantés sur la face Terre du satellite, la face Terre étant la face du satellite orientée face à la Terre. Or cela pose des problèmes d'aménagements, car la face Terre du satellite est généralement destinée à l'implantation d'antennes et d'équipements liés à la mission globale du satellite. En outre ces antennes sont complexes et nécessitent d'embarquer un système de déploiement pour les réflecteurs secondaires ce qui augmente le coût.

A notre connaissance, il n'existe pas, actuellement, de solution permettant d'aménager deux antennes à double réflecteurs, l'une au moins des deux antennes ayant un rapport F/D supérieur à 1,1, sur une même face d'un satellite en raison de l'encombrement des réflecteurs secondaires. Le problème, est que cela limite le nombre d'antennes qu'il est possible d'embarquer sur un satellite et donc limite le nombre de missions à réaliser.

Le but de l'invention est de remédier aux inconvénients des antennes à double réflecteurs connues et de réaliser un ensemble de deux antennes à double réflecteurs pouvant être aménagé sur la même face d'un satellite et permettant d'augmenter la focale des deux antennes et de garantir un niveau de performances supérieur à celui obtenu avec des ensembles d'antennes à double réflecteurs connus.

Pour cela, l'invention concerne un ensemble de deux antennes à double réflecteurs, les deux antennes comportant un support commun sur lequel elles sont montées, chaque antenne comportant un réflecteur principal, un réflecteur secondaire et au moins une source rayonnante placée devant le réflecteur secondaire correspondant, chaque antenne étant apte à élaborer un faisceau, les deux antennes s'entrecroisant sur le support commun.

Avantageusement, les deux sources rayonnantes et les deux réflecteurs secondaires des deux antennes sont respectivement entrecroisés sur le support commun par rapport aux deux réflecteurs principaux des deux antennes.

Avantageusement, le réflecteur principal d'au moins l'une des deux antennes a un rapport F/D supérieur à 1,1, où F et D sont respectivement la longueur focale et le diamètre dudit réflecteur principal.

Avantageusement, les réflecteurs principaux des deux antennes peuvent être fixés sur le support commun ou être déployables.

Avantageusement, les deux antennes à double réflecteurs peuvent avoir un réflecteur secondaire commun et des sources rayonnantes qui s'entrecroisent sur le support commun.

Alternativement, les deux antennes peuvent avoir un réflecteur principal commun, les deux sources rayonnantes et les deux réflecteurs secondaires des deux antennes étant alors respectivement entrecroisés sur le support commun.

L'invention concerne aussi un satellite qui comporte au moins un ensemble de deux antennes à double réflecteurs, le support commun des deux antennes étant une face du satellite qui peut en particulier être une face latérale du satellite ou une face Terre.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma en coupe d'un exemple d'un ensemble de deux antennes à double réflecteurs, selon l'art antérieur ;
- figure 2 : un schéma en coupe illustrant un premier exemple d'un ensemble de deux antennes à double réflecteurs en double déploiement, selon l'invention;
- figure 3: un schéma en coupe illustrant un deuxième exemple d'un ensemble de deux antennes à double réflecteurs en mono-déploiement, selon l'invention.
- figure 4 : un schéma en coupe illustrant un troisième exemple d'un ensemble de deux antennes à double réflecteurs, le réflecteur principal étant commun au deux antennes, selon l'invention ;
- figure 5 : un schéma d'un exemple de satellite incluant un ensemble de deux antennes sur une même face, selon l'invention.

La figure 2 représente un ensemble de deux antennes à double réflecteurs 15, 25, les deux antennes étant montées sur un support commun 30, par exemple une même face d'un satellite, la face du satellite pouvant être par exemple une face latérale ou une face Terre du satellite. Chaque antenne comporte un réflecteur principal 10, 20 un réflecteur secondaire 11, 21 et au moins une source rayonnante 12, 22 illuminant le réflecteur secondaire correspondant. Les deux antennes peuvent avoir les mêmes dimensions et la même longueur focale F, mais ce n'est pas obligatoire. Au lieu d'être disposées de part et d'autre d'une ligne médiane 13 du support commun 30, les deux antennes à double réflecteurs 15, 25 s'entrecroisent sur le support commun, ce qui permet de rapprocher les réflecteurs principaux l'un de l'autre sur le support commun. Comme le montre la figure 2, les trajets optiques 26, 27 des faisceaux élaborés par les deux antennes sont entrecroisés, le point de croisement des trajets optiques étant localisé entre le réflecteur principal et le réflecteur secondaire de chaque antenne. Ainsi, sur la figure 2, le support commun comporte deux zones différentes 35, 36 délimitées par une ligne médiane 13, les deux zones 35, 36 étant, sur l'exemple de la figure 2, situées respectivement à gauche et à droite de la ligne médiane 13. La source rayonnante 12 et le réflecteur secondaire 11 de la première antenne à double réflecteurs 15 sont disposés dans la seconde zone 36, à droite de la ligne médiane, alors que le réflecteur principal 10 de ladite première antenne à double réflecteurs est disposé dans la première zone 35, à gauche de la ligne médiane. La configuration de la seconde antenne à double réflecteurs 25 est symétrique de la première antenne à double réflecteurs 15 par rapport à la ligne médiane 13. Par conséquent, pour chaque antenne à double réflecteurs, la source rayonnante et le réflecteur secondaire sont disposés dans une même première zone par rapport à la ligne médiane du support commun alors que le réflecteur principal de l'antenne correspondante est situé dans une deuxième zone opposée à la première zone par rapport à la ligne médiane du support commun. Ainsi, les sources rayonnantes 12, 22 des deux antennes sont entrecroisées entre elles, et les deux réflecteurs secondaires 11, 21 des deux antennes sont également entrecroisés entre eux. Cela présente l'avantage de pouvoir rapprocher les deux réflecteurs principaux 10, 20 des deux antennes 15, 25 l'un de l'autre et permet d'augmenter la longueur focale des deux antennes à double réflecteurs. Au moins l'une des deux antennes peut alors avoir un rapport F/D supérieur à 1,1, où F et D sont respectivement la longueur focale et le diamètre du réflecteur principal de l'antenne, le diamètre du réflecteur principal correspondant à l'ouverture rayonnante du réflecteur principal projetée sur la Terre.

Les réflecteurs principaux 10, 20 des deux antennes à double réflecteurs peuvent être montés de façon fixe sur le support commun 30 ou peuvent être montés par l'intermédiaire d'un système de déploiement de façon à être déployables.

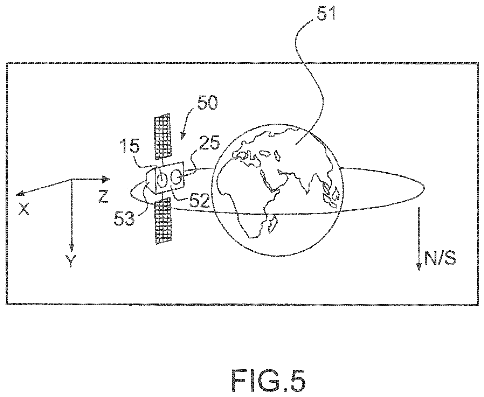

Le support commun 30 peut être fixé sur n'importe quelle face d'un satellite et peut, en particulier, être fixé sur une face latérale 53 ou sur la face Terre 52 du satellite, c'est-à-dire la face orientée vers la Terre. Sur l'exemple de la figure 5, le satellite 50 est en orbite autour de la Terre 51 et comporte un ensemble d'antennes montées sur la face Terre 52.

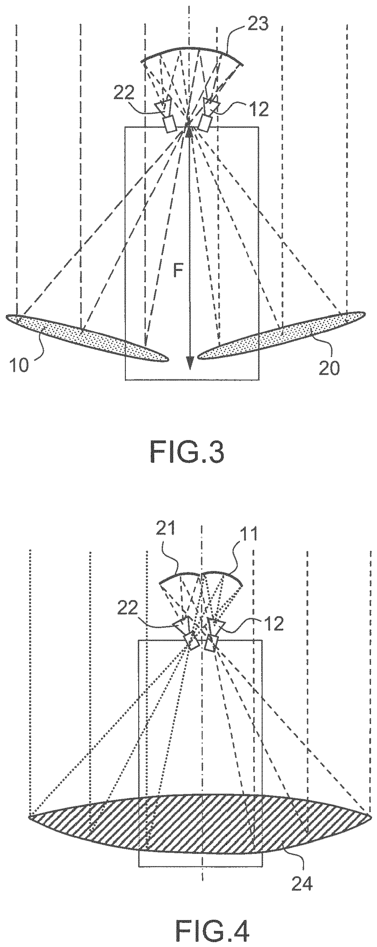

Les deux antennes à double réflecteurs 15, 25 peuvent avoir deux réflecteurs secondaires 11, 21 différents séparés l'un de l'autre comme dans la figure 2. Alternativement, les deux antennes à double réflecteurs peuvent avoir un réflecteur secondaire commun 23, comme sur la figure 3, et des sources rayonnantes qui s'entrecroisent dans le plan focal du réflecteur secondaire commun.

De même, les deux antennes à double réflecteurs 15, 25 peuvent avoir deux réflecteurs principaux 10, 20 différents séparés l'un de l'autre comme dans la figure 2. Alternativement les deux antennes à double réflecteurs peuvent avoir un réflecteur principal commun 24, comme sur la figure 4, les deux sources rayonnantes 12, 22 et les deux réflecteurs secondaires 11, 21 des deux antennes 15, 25 étant respectivement entrecroisés sur le support commun 30.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble de deux antennes à double réflecteurs, les deux antennes comportant un support commun (30) sur lequel elles sont montées, chaque antenne comportant un réflecteur principal (10, 20), un réflecteur secondaire (11, 21) et au moins une source rayonnante (12, 22) placée devant le réflecteur secondaire correspondant, chaque antenne étant apte à élaborer un faisceau,
**caractérisé en ce que** les deux sources rayonnantes (12, 22) et les deux réflecteurs secondaires (11, 21) des deux antennes (15, 25) sont respectivement entrecroisés sur le support commun (30) par rapport aux réflecteurs principaux (10, 20) des deux antennes (15, 25), les trajets optiques (26, 27) des faisceaux élaborés par les deux antennes s'entrecroisant ainsi en un point de croisement localisé entre le réflecteur principal et le réflecteur secondaire de chaque antenne.

2. Ensemble de deux antennes à double réflecteurs, les deux antennes comportant un support commun (30) sur lequel elles sont montées, chaque antenne comportant un réflecteur principal (10, 20) et au moins une source rayonnante (12, 22), chaque antenne étant apte à élaborer un faisceau, **caractérisé en ce que** les deux antennes ont un réflecteur secondaire commun (23) et leurs sources rayonnantes (12, 22), placées devant le réflecteur secondaire commun, qui s'entrecroisent sur le support commun (30), les trajets optiques (26, 27) des faisceaux élaborés par les deux antennes s'entrecroisant ainsi en un point de croisement localisé entre le réflecteur principal et le réflecteur secondaire de chaque antenne.

3. Ensemble de deux antennes à double réflecteurs, les deux antennes comportant un support commun (30) sur lequel elles sont montées, chaque antenne comportant un réflecteur secondaire (11, 21) et au moins une source rayonnante (12, 22) placée devant le réflecteur secondaire, chaque antenne étant apte à élaborer un faisceau, **caractérisé en ce que** les deux antennes (15, 25) ont un réflecteur principal commun (24) et **en ce que** les deux sources rayonnantes (12, 22) et les deux réflecteurs secondaires (11, 21) des deux antennes (15, 25) sont respectivement entrecroisés sur le support commun (30), les trajets optiques (26, 27) des faisceaux élaborés par les deux antennes s'entrecroisant ainsi en un point de croisement localisé entre le réflecteur principal et le réflecteur secondaire de chaque antenne.

4. Ensemble de deux antennes à double réflecteurs selon la revendication 1, **caractérisé en ce que** le réflecteur principal d'au moins l'une des deux antennes a un rapport F/D supérieur à 1,1, où F et D sont respectivement la longueur focale et le diamètre dudit réflecteur principal.

5. Ensemble de deux antennes à double réflecteurs selon l'une des revendications 1 ou 4, **caractérisé en ce que** les réflecteurs principaux (10, 20) des deux antennes sont fixés sur le support commun (30).

6. Ensemble de deux antennes à double réflecteurs selon l'une des revendications 1 ou 4, **caractérisé en ce que** les réflecteurs principaux (10, 20) des deux antennes sont déployables.

7. Satellite **caractérisé en ce qu'**il comporte au moins un ensemble de deux antennes à double réflecteurs (15, 25) selon l'une des revendications précédentes, le support commun (30) des deux antennes étant une face du satellite (50).

8. Satellite selon la revendication 7, **caractérisé en ce que** la face du satellite (50) est une face latérale (53).

9. Satellite selon la revendication 7, **caractérisé en ce que** la face du satellite (50) est une face Terre (52).

## Patentansprüche

1. Einheit aus zwei Antennen mit Doppelreflektoren, wobei die beiden Antennen eine gemeinsame Halterung (30) aufweisen, auf der sie montiert sind, wobei jede Antenne einen Hauptreflektor (10, 20), einen sekundären Reflektor (11, 21) und mindestens eine Strahlungsquelle (12, 22) aufweist, die vor dem entsprechenden sekundären Reflektor platziert ist, wobei jede Antenne fähig ist, ein Strahlenbündel auszubilden,
**dadurch gekennzeichnet, dass** die beiden Strahlungsquellen (12, 22) und die beiden sekundären Reflektoren (11, 21) der beiden Antennen (15, 25) auf der gemeinsamen Halterung (30) in Bezug auf die Hauptreflektoren (10, 20) der beiden Antennen (15, 25) jeweils überkreuzt sind, wodurch sich die optischen Bahnen (26, 27) der durch die beiden Antennen ausgebildeten Strahlenbündel in einem Kreuzungspunkt überkreuzen, der sich zwischen dem Hauptreflektor und dem sekundären Reflektor jeder Antenne befindet.

2. Einheit aus zwei Antennen mit Doppelreflektoren, wobei die beiden Antennen eine gemeinsame Halterung (30) aufweisen, auf der sie montiert sind, wobei jede Antenne einen Hauptreflektor (10, 20) und mindestens eine Strahlungsquelle (12, 22) aufweist, wobei jede Antenne fähig ist, ein Strahlenbündel auszubilden, **dadurch gekennzeichnet, dass** die beiden Antennen einen gemeinsamen sekundären Reflektor (23) haben und ihre Strahlungsquellen (12, 22), die vor dem gemeinsamen sekundären Reflektor platziert sind, die sich auf der gemeinsamen Halterung (30) überkreuzen, wodurch sich die optischen Bahnen (26, 27) der durch die beiden Antennen ausgebildeten Strahlenbündel in einem Kreuzungspunkt überkreuzen, der sich zwischen dem Hauptreflektor und dem sekundären Reflektor jeder Antenne befindet.

3. Einheit aus zwei Antennen mit Doppelreflektoren, wobei die beiden Antennen eine gemeinsame Halterung (30) aufweisen, auf der sie montiert sind, wobei jede Antenne einen sekundären Reflektor (11, 21) und mindestens eine Strahlungsquelle (12, 22) aufweist, die vor dem sekundären Reflektor platziert ist, wobei jede Antenne fähig ist, ein Strahlenbündel auszubilden, **dadurch gekennzeichnet, dass** die beiden Antennen (15, 25) einen gemeinsamen Hauptreflektor (24) haben, und dadurch, dass die beiden Strahlungsquellen (12, 22) und die beiden sekundären Reflektoren (11, 21) der beiden Antennen (15, 25) sich jeweils auf der gemeinsamen Halterung (30) überkreuzen, wodurch sich die optischen Bahnen (26, 27) der durch die beiden Antennen ausgebildeten Strahlenbündel in einem Kreuzungspunkt überkreuzen, der sich zwischen dem Hauptreflektor und dem sekundären Reflektor jeder Antenne befindet.

4. Einheit aus zwei Antennen mit Doppelreflektoren nach Anspruch 1, **dadurch gekennzeichnet, dass** der Hauptreflektor von mindestens einer der beiden Antennen ein Verhältnis F/D höher als 1,1 hat, wobei F und D jeweils die Brennweite und der Durchmesser des Hauptreflektors sind.

5. Einheit aus zwei Antennen mit Doppelreflektoren nach einem der Ansprüche 1 oder 4, **dadurch gekennzeichnet, dass** die Hauptreflektoren (10, 20) der beiden Antennen auf der gemeinsamen Halterung (30) befestigt sind.

6. Einheit aus zwei Antennen mit Doppelreflektoren nach einem der Ansprüche 1 oder 4, **dadurch gekennzeichnet, dass** die Hauptreflektoren (10, 20) der beiden Antennen ausfahrbar sind.

7. Satellit, **dadurch gekennzeichnet, dass** er mindestens eine Einheit aus zwei Antennen (15, 25) mit Doppelreflektoren nach einem der vorhergehenden Ansprüche aufweist, wobei die gemeinsame Halterung (30) der beiden Antennen eine Fläche des Satelliten (50) ist.

8. Satellit nach Anspruch 7, **dadurch gekennzeichnet, dass** die Fläche des Satelliten (50) eine Seitenfläche (53) ist.

9. Satellit nach Anspruch 7, **dadurch gekennzeichnet, dass** die Fläche des Satelliten (50) eine der Erde zugewandte Fläche (52) ist.

## Claims

1. An array of two twin-reflector antennas, the two antennas comprising a common support (30) on which they are mounted, each antenna comprising a main reflector (10, 20), a secondary reflector (11, 21) and at least one radiating source (12, 22) placed in front of the corresponding secondary reflector, each antenna being capable of producing a beam,
**characterised in that** the two radiating sources (12, 22) and the two secondary reflectors (11, 21) of the two antennas (15, 25) respectively intersect on the common support (30) in relation to the main reflectors (10, 20) of the two antennas (15, 25), the optical paths (26, 27) of the beams produced by the two antennas thus intersecting at an intersection point located between the main reflector and the secondary reflector of each antenna.

2. An array of two twin-reflector antennas, the two antennas comprising a common support (30) on which they are mounted, each antenna comprising a main reflector (10, 20) and at least one radiating source (12, 22), each antenna being capable of producing a beam, **characterised in that** the two antennas have a secondary common reflector (23) and their radiating sources (12, 22) placed in front of the common secondary reflector, that intersect on the common support (30), the optical paths (26, 27) of the beams produced by the two antennas thus intersecting at an intersection point located between the main reflector and the secondary reflector of each antenna.

3. An array of two twin-reflector antennas, the two antennas comprising a common support (30) on which they are mounted, each antenna comprising a secondary reflector (11, 21) and at least one radiating source (12, 22) placed in front of the secondary reflector, each antenna being able to produce a beam, **characterised in that** the two antennas (15, 25) have a common main reflector (24) and **in that** the two radiating sources (12, 22) and the two secondary reflectors (11, 21) of the two antennas (15, 25) respectively intersect on the common support (30), the optical paths (26, 27) of the beams produced by the two antennas thus intersecting at an intersection point located between the main reflector and the secondary reflector of each antenna.

4. The array of two twin-reflector antennas according to Claim 1, **characterised in that** the main reflector of at least one of the two antennas has an F/D ratio greater than 1.1, where F and D are respectively the focal length and the diameter of said main reflector.

5. The array of two twin-reflector antennas according to any of Claims 1 to 4, **characterised in that** the main reflectors (10, 20) of the two antennas are fixed onto the common support (30).

6. The array of two twin-reflector antennas according to any of Claims 1 to 4, **characterised in that** the main reflectors (10, 20) of the two antennas are deployable.

7. A satellite, **characterised in that** it comprises at least one array of two twin-reflector antennas (15, 25) according to any of the preceding claims, the common support (30) of the two antennas being a side of the satellite (50).

8. The satellite according to Claim 7, **characterised in that** the side of the satellite (50) is a lateral side (53).

9. The satellite according to Claim 7, **characterised in that** the side of the satellite (50) is an Earth side (52).
